# EUROPEAN PATENT APPLICATION

(11) **EP 4 554 264 A1**
(43) Date of publication of application: **14.05.2025**
(21) Application number: 23844801.3
(22) Date of filing: 20.02.2023
(51) Int. Cl.: H04W 8/20

(54) **NETWORK DATA PLANE SYSTEM, DATA INTERACTION METHOD, AND STORAGE MEDIUM**

(30) Priority: 29.07.2022 CN 202210907497
(71) Applicant: ZTE Corporation, Shenzhen, Guangdong 518057 (CN)
(72) Inventor: SUN, Wei, Shenzhen, Guangdong 518057 (CN); SI, Wei, Shenzhen, Guangdong 518057 (CN)
(74) Representative: Savi, Massimiliano
(86) International application number: PCT/CN2023/077224
(87) International publication number: WO 2024/021582

(57) **Abstract**

The present application discloses a network data plane system, a data interaction method, and a storage medium. The network data plane system comprises a first-level data plane system. The first-level data plane system comprises a first application proxy module and a first data service module. The first data service module is configured to send a standard data subscription requirement to a second-level data plane system according to the standard data subscription requirement, and the first data service module is further configured to send a standard data extraction request to the second-level data plane system according to the standard data extraction request, so as to obtain second subscription data which is obtained by the second-level data plane system according to the standard data subscription requirement, so that the first application proxy module obtains customized data according to first subscription data and the second subscription data and sends the customized data to a data consumer.

## Description

### CROSS-REFERENCE TO RELATED APPLICATION

This application is filed on the basis of the Chinese patent application No. 202210907497.X filed July 29, 2022, and claims priority of the Chinese patent application, the entire contents of which are incorporated herein by reference.

### TECHNICAL FIELD

The present disclosure relates to the field of mobile communication networks, and in particular to a network data plane system, a method for data interaction, and a storage medium.

### BACKGROUND

Under some conditions where no data plane system across the network protocol stack or network devices are designed within the 4G and 5G network architectures, the data collaboration between different protocol layers or devices in the network lacks standardized processes. The data processing related processes of different devices and different protocol layers are different, and the complexity of data maintenance increases sharply with the increase of data collaboration parties, resulting in the low success rate of functional collaboration based on data interaction between different network layers.

### SUMMARY

Provided are a network data plane system, a method for data interaction, and a storage medium in various embodiments of the present disclosure.

According to a first aspect of the present disclosure, a network data plane system is provided. The system includes a first-level data plane system. The first-level data plane system includes a first application proxy module and a first data service module. The first application proxy module is configured to send a standard data subscription demand and standard data extraction request sent by a data consumer to the first data service module. The first data service module is provided with a first data model, and is configured to send the standard data subscription demand to a second-level data plane system according to the standard data subscription demand, and to acquire first subscription data according to the first data model and the standard data subscription demand. The first data service module is further configured to send a standard data extraction request to the second-level data plane system according to the standard data extraction request to acquire second subscription data that is acquired by the second-level data plane system according to the standard data subscription demand, and to send the first subscription data and the second subscription data to the first application proxy module, to allow the first application proxy module to acquire customized data according to the first subscription data and the second subscription data and to send the customized data to the data consumer.

According to a second aspect of the present disclosure, a network data plane system is provided. The system includes a second-level data plane system that is in communicative connection with a first-level data plane system. The second-level data plane system includes: a second data service module, which is provided with a second data model, and is connected with a first data service module in the first-level data plane system to receive the standard data subscription demand and standard data extraction request sent by the first data service module. The second data service module is configured to acquire second subscription data according to the standard data subscription demand and the second data model, and to send the second subscription data to the first data service module according to the standard data extraction request.

According to a third aspect of the present disclosure, a method for data interaction for a network data plane system is provided. The method is applied to a first-level data plane system in the network data plane system. The first-level data plane system includes a first application proxy module and a first data service module, and the first data service module is provided with a first data model, and the first data service module is connected with the first application proxy module. The method includes: sending by the first application proxy module, a standard data subscription demand sent by a data consumer to the first data service module; receiving the standard data subscription demand by the first data service module, and sending the standard data subscription demand to a second-level data plane system according to the standard data subscription demand, and acquiring first subscription data according to the first data model and the standard data subscription demand; sending a standard data extraction request sent by the data consumer to the first data service module through the first application proxy module; receiving the standard data extraction request by the first data service module, and sending the standard data extraction request to the second-level data plane system according to the standard data extraction request to acquire second subscription data obtained by the second-level data plane system according to the standard data subscription demand, and sending the first subscription data and the second subscription data to the first application proxy module; and receiving the first subscription data and the second subscription data by the first application proxy module, to acquire customized data according to the first subscription data and the second subscription data, and sending the customized data to the data consumer.

According to a fourth aspect of the present disclosure, a method for data interaction for a network data plane system is provided. The method is applied to a second-level data plane system in the network data plane system. The second-level data plane system is in communicative connection with a first-level data plane system. The second-level data plane system includes a second data service module provided with a second data model. The second data service module is connected with a first data service module in the first-level data plane system. The method includes: receiving a standard data subscription demand sent by the first data service module by the second data service module, and acquiring second subscription data according to the standard data subscription demand and the second data model; and receiving the standard data extraction request sent by the first data service module by the second data service module, and sending the second subscription data to the first data service module according to the standard data extraction request.

According to a fifth aspect of the present disclosure, a network data plane system is provided. The system includes a memory, a processor, and a computer program stored in the memory and executable on the processor which, when executed by the processor, causes the processor to carry out the method according to the third aspect or the method according to the fourth aspect as described above.

According to a sixth aspect of the present disclosure, a computer-readable storage medium is provided, which stores thereon a computer-executable instruction which, when executed by a processor causes the processor to carry out the method according to the third aspect or the method according to the fourth aspect as described above.

Additional aspects and/or advantages of the present disclosure will be set forth in part in the description which follows, and in part will be apparent from the description which follows, or may be learned by practice of the present disclosure.

### BRIEF DESCRIPTION OF DRAWINGS

The above and/or additional features and advantages of the present disclosure will be set forth in the subsequent description, and in part will become apparent from the description in conjunction with the drawings.
FIG. 1 depicts a schematic diagram showing a network data plane system according to an embodiment of the present disclosure;
FIG. 2 depicts a flowchart showing a process in a network data plane system according to an embodiment of the present disclosure;
FIG. 3 depicts a flowchart showing data subscription and collection by a network data plane system according to an embodiment of the present disclosure;
FIG. 4 depicts a flowchart showing data customization and extraction by a network data plane system according to an embodiment of the present disclosure;
FIG. 5 depicts a schematic diagram of a network data plane system according to another embodiment of the present disclosure;
FIG. 6 depicts a flowchart of the method for data interaction for a network data plane system according to the third aspect of the present disclosure;
FIG. 7 depicts a flowchart showing the acquisition of the first subscription data according to the third aspect of the present disclosure;
FIG. 8 depicts a flowchart showing the acquisition of the first subscription data according to the third aspect of the present disclosure;
FIG. 9 depicts a flowchart showing the acquisition of standard data subscription demand according to the third aspect of the present disclosure;
FIG. 10 depicts a flowchart showing an extraction request for obtaining standard data according to the third aspect of the present disclosure;
FIG. 11 depicts a flowchart showing the acquisition of a first data customization rule according to the third aspect of the present disclosure;
FIG. 12 depicts a flowchart showing the acquisition of customized data according to the third aspect of the present disclosure;
FIG. 13 depicts a flowchart showing a method for data interaction for a network data plane system according to the fourth aspect of the present disclosure;
FIG. 14 depicts a flowchart showing the acquisition of second subscription data according to the fourth aspect of the present disclosure; and
FIG. 15 depicts a flowchart showing the acquisition of the second subscription data according to the fourth aspect of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It shall be noted that, although the system is shown with individual functional modules in the schematic diagram and the logical sequences are shown in the flow chart, in some cases, the system can have different modules than those shown, and the operations can be executed in a different order than those shown. It should be noted that the terms used in the description, the claims and the drawings are intended to distinguish similar objects, and do not necessarily imply any specific order or sequence.

It should be noted that although the devices are shown with individual functional modules in the schematic diagram and the logical sequences are shown in the flow chart, in some cases, the devices can have different modules than those shown, and the operations can be executed in a different order than those shown. It should be noted that the terms "first" and "second", if used in the description, the claims and the drawings are intended to distinguish similar objects, and do not necessarily imply any specific order or sequence.

In the related art where no data plane system across the network protocol stack or network devices are designed within the 4G and 5G network architectures, the data between different protocol layers or devices in the network is not standardized and lacks life cycle management, and the data collaboration lacks standardized processes. In some embodiments, data without standardized refers to the case that different devices in the network use their own data standards, and different protocol layers also use their own data standards. In such a case, when network functions require cross-device collaboration, the meaning, dimension, and granularity of the data collected by each device are not unified, the data types are few, and the data has quality problems such as missing, unlabeled, and time misalignment, resulting in the failure of collaboration based on data interaction due to misaligned data content. Lack of life cycle management of data means that different devices and different protocol layers in the network have different data generation capacity and storage capacity, which leads to the failure of cooperation due to the different amounts of data when network devices cooperate. The lack of standard process in data collaboration means that different devices and different protocol layers have different data processing processes, and the complexity of data maintenance increases sharply with the increase of data collaboration parties, resulting in low success rate of functional collaboration based on data interaction between different network layers.

In view of this, a network data plane system, a method for data interaction, and a storage medium are provided in various embodiments of the present disclosure. In an embodiment, the network data plane system includes a first-level data plane system and a second-level data plane system. A first data service module in the first-level data plane system sends a standard data subscription demand to the second-level data plane system according to the standard data subscription demand sent by a first application proxy module, and acquires first subscription data according to a first data model and the standard data subscription demand. The first data service module further sends a standard data extraction request to the second-level data plane system according to the standard data extraction request sent by the first application proxy module to acquire second subscription data obtained by the second-level data plane system according to the standard data subscription demand, and sends the first subscription data and the second subscription data to the first application proxy module, such that the first application proxy module acquires customized data according to the first subscription data and the second subscription data and sends the customized data to the data consumer. According to the present disclosure, the interpretation of the same data by data plane systems at different levels of the network can be aligned, data models and standardized processes at different network layers can be connected, the consistency and effectiveness of network data are improved, and the success rate of functional cooperation based on data interaction between different network layers is improved.

Several embodiments of the present disclosure will be further illustrated with reference to the drawings.

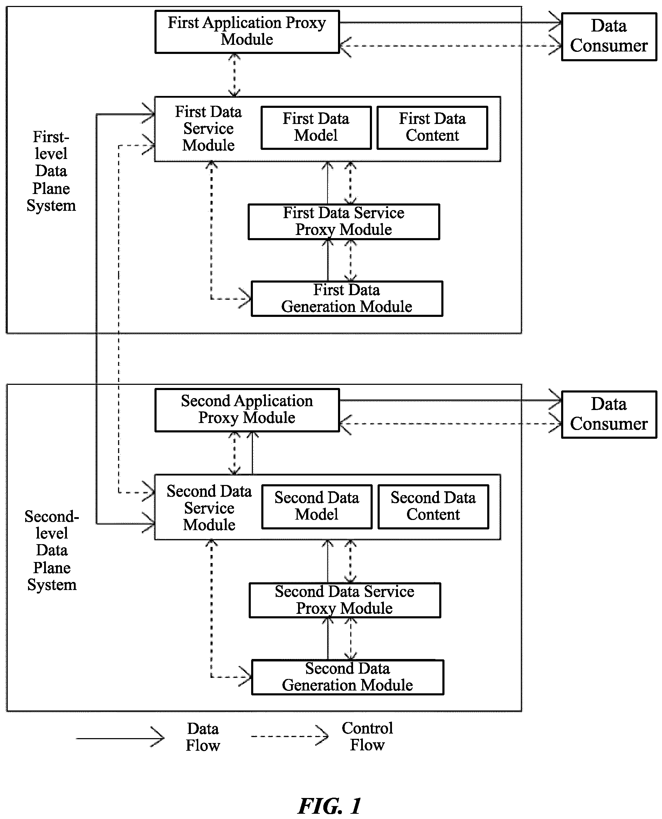

According to a first aspect of the present disclosure, a network data plane system is provided. FIG. 1 depicts a schematic diagram showing the network data plane system according to an embodiment of the present disclosure. The network data plane system includes a first-level data plane system that includes a first application proxy module and a first data service module. The first application proxy module is configured to send a standard data subscription demand, and a standard data extraction request sent by a data consumer to the first data service module. The first data service module is provided with a first data model. The first data service module is configured to send a standard data subscription demand to a second-level data plane system according to the standard data subscription demand, and to acquire first subscription data according to a first data model and the standard data subscription demand. The first data service module is further configured to send a standard data extraction request to the second-level data plane system according to the standard data extraction request to acquire the second subscription data that is acquired by the second-level data plane system according to the standard data subscription demand, and to send the first subscription data and the second subscription data to the first application proxy module, to allow the first application proxy module to obtain customized data according to the first subscription data and the second subscription data and send the customized data to the data consumer.

In an implementation, firstly, the first application proxy module receives the data subscription demand sent by the data consumer and generates standard data subscription demand according to the data subscription demand, and sends the standard data subscription demand to the first data service module. Subsequently, the first data service module determines whether to send the standard data subscription demand to the second-level data plane system according to the standard data subscription demand, and acquires the first subscription data according to the first data model and the standard data subscription demand, and sends the first subscription data to the first application proxy module. Secondly, the first application proxy module receives the data customization demand sent by the data consumer and generates standard data customization demand according to the data customization demand, and sends the standard data customization demand to the first data service module. Subsequently, the first data service module receives the standard data customization demand and generates a first data customization rule according to the standard data customization demand and the first data model, and sends the first data customization rule to the first application proxy module. Finally, the first application proxy module receives the data extraction request sent by the data consumer and generates a standard data extraction request according to the data extraction request, and sends the standard data extraction request to the first data service module. Subsequently, the first data service module further determines whether to send the standard data extraction request to the second-level data plane system according to the standard data extraction demand to obtain the second subscription data obtained by the second-level data plane system according to the standard data subscription demand, and sends the second subscription data to the first application proxy module. The first application proxy module receives the first subscription data and the second subscription data and processes the first subscription data and the second subscription data according to the first data customization rule, so as to obtain customized data and send the customized data to data consumer.

In some embodiments, the first data service module generates a data acquisition task according to the standard data subscription demand, determines whether the data acquisition task can be fulfilled by the data in the data plane system at the current level, i.e., the first level, and whether the data in the lower level (i.e., the second level) data plane system is needed. In response to a determination that the data in the current level can fulfill the task, the first data service module acquires the first subscription data according to the first data model and the standard data subscription demand, and sends the first subscription data to the first application proxy module. In response to a determination that the data in the lower level (i.e., the second level) data plane system, is needed, it is necessary to send the standard data subscription demand to the second-level data plane system, and obtain the first subscription data according to the first data model and the standard data subscription demand, and send the first subscription data to the first application proxy module. The first data service module generates the data extraction task according to the standard data extraction request, determines whether the data extraction task can be fulfilled through the data in the current level data plane system, and whether additional data in the lower level data plane system is needed. In response to a determination that the data in the current level can fulfill the task, the first data service module collects each required data according to the data extraction task and sends each required data to the first application proxy module. Then, the first application proxy module processes the required data according to the first data customization rule and sends the processed data to data consumer. In response to a determination that the data in the lower level data plane system is needed, it is necessary to send a standard data extraction request to the second-level data plane system to obtain each required data specified in the data extraction task from the second-level data plane system. Then, the data from the second-level data plane system and the required data in the current level data plane system are sent to the first application proxy module. The first application proxy module then processes all the required data according to the first data customization rule and sends the processed data to the data consumer.

In some embodiments, the first data service module generates a data customization task according to the standard data customization demand and stores the data customization task. It is not necessary for the first data service module to send the standard data customization demand to the lower level data plane system, regardless of whether the data customization task requires the data from the lower level data plane system. Instead, the first data service module directly generates a first data customization rule according to the standard data customization demand and the first data model, and then sends the first data customization rule to the first application proxy module. In some other embodiments, the first data service module generates a data customization task according to the standard data customization demand, stores the data customization task, and determines whether the data customization task can be fulfilled by the data in the current level data plane system and whether additional data from the lower level data plane system is needed. In response to a determination that the data in the current level data plane system can fulfill the task, the first data service module generates the first data customization rule according to the standard data customization demand and the first data model, and sends the first data customization rule to the first application proxy module. In response to a determination that additional data from the lower level data plane system is needed, it is necessary for the first data service module to send standard data customization demand to the second level data plane system.

In some implementations, the first-level data plane system is a higher-level network equipment data plane module, whereas the second-level data plane system is a lower-level network equipment data plane module. The second-level data plane system includes a second application proxy module and a second data service module. The first application proxy module is connected with the first data service module. The second application proxy module is connected with the second data service module. The first data service module is connected with the second data service module. The second data service module is provided with a second data model and a second data content. Similarly, the first data service module is provided with a first data model and a first data content. The first data model is identical to the second data model, while the first data content is different from the second data content. Through this configuration, the interpretation of the same data by data plane systems at different levels of the network can be aligned based on a unified data model. With unified data models defined in the network data plane system, the data plane unifies the generation, storage, access and use standards of data in the network, providing efficient data services for network intelligence and network digital twin construction, and providing data foundation for the endogenous architecture of network intelligence. In another embodiment, the first-level data plane system and the second-level data plane system can be different level data plane systems of the same device or different level data plane systems across different devices.

In an embodiment, when the network data plane system is defined, the data plane runs through different device levels and different protocol stacks. Data service module(s) is/are provided in each level of device to manage the data produced or stored by the data plane system at current level, and provide data capabilities for data consumers at the current level and network nodes at higher levels. The data service module includes functionalities such as data acquisition, data preprocessing, data storage, data access, data exposure, and data collaboration.

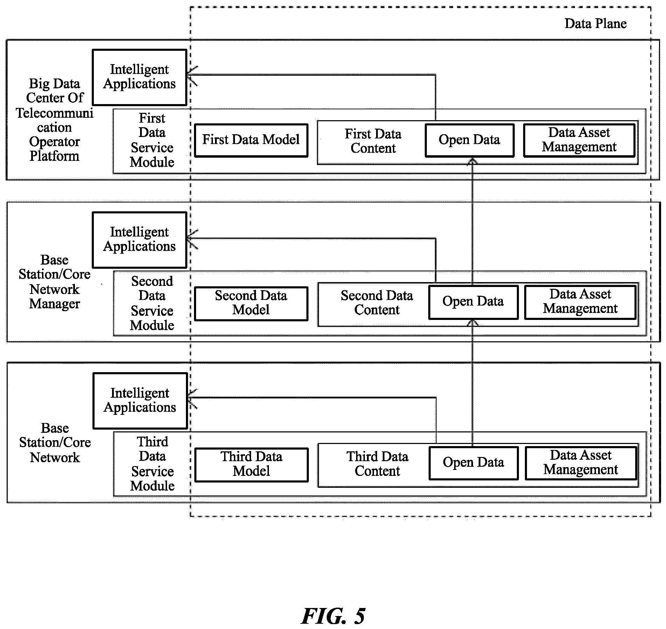

In some embodiments, the network data plane system can include more data plane systems(s), in addition to the first-level data plane system and the second-level data plane system, and the present disclosure is not limited thereto. As shown in FIG. 5, the network data plane system includes three levels of data plane systems: a big data center of a telecommunication operator platform, a base station network manager/core network manager, and a base station/core network.

In an embodiment, the first application proxy module is configured to forward, and adapt to the interface between data services and data consumers, and is further configured to process and convert standardized data such as first subscription data and second subscription data into data structures and contents required by data consumers.

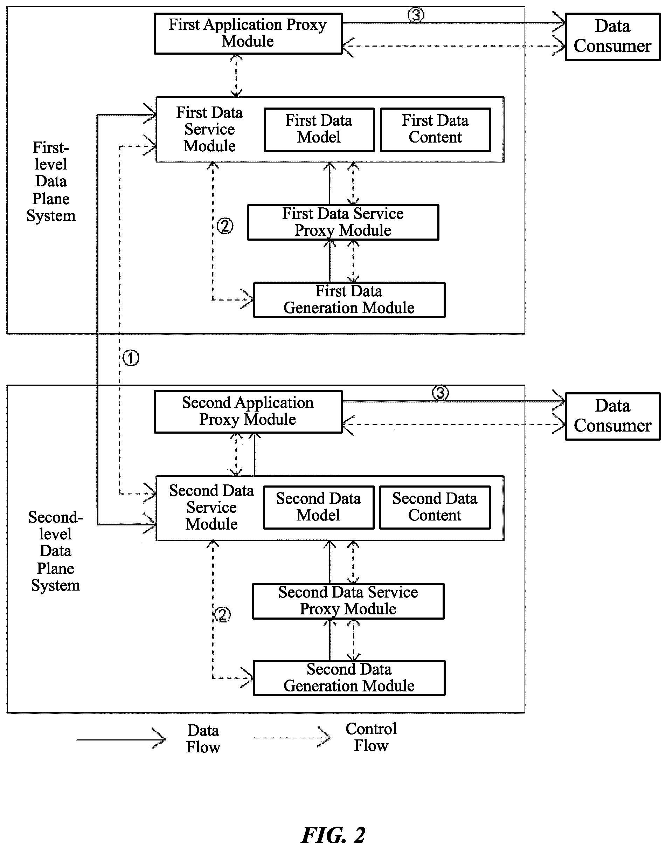

Referring to FIG. 2, reference numeral "①" denotes the first control flow representing that the interaction of data model between the data plane module of the higher-level network device in the network, i.e., the first data service module of the first-level data plane system and the data plane module of the lower-level network device, i.e., the second data service module of the second-level data plane system, to align the interpretation of data structure and content by different data plane systems. The data collaborative processing process of cross-layer network devices is unified through the interaction of data generation demands, data customization demands and data extraction demands. The data demands of data consumers of different network-level data plane systems are fulfilled through the interaction of data content. Reference numeral "③" denotes the third data flow representing that the first application proxy module interacts with different data consumers to adapt to the different data structures, formats and contents of different data consumers, and is responsible for the conversion between diversified data and standardized data.

Referring back to FIG. 1, in some embodiments, it can be understood that the first-level data plane system further includes a first data execution module (not shown). The first data execution module is connected with the first data service module. In such a case, the first data service module is further configured to generate a first data generation rule and a first data processing conversion rule according to a first data model and standard data subscription demand, and send the first data generation rule and the first data processing conversion rule to the first data execution module. The first data execution module is configured to generate the first subscription data according to the first data generation rule and the first data processing conversion rule and send the first subscription data to the first data service module.

It should be noted that the first data service module is configured for: managing the first data model, data generation and standardization processing, storage and management of data standardization data content, processing of data subscription and collection tasks, processing of data customization and extraction tasks, and interaction of data models, data generation demands, data customization demands, data extraction demands and data content among data services of devices at different levels of the network. After the first data execution module sends the processed standardized data, i.e., the first subscription data, to the first data service module, the first data service module stores and manages the first subscription data according to the first data model.

Referring to FIGS. 1 to 3, it can be understood that the first data execution module includes a first data service proxy module and a first data generation module. The first data service module is connected with the first data generation module and the first data service proxy module respectively. The first data generation module is connected with the first data service proxy module. The first data generation module is configured to receive a first data generation rule, generate first raw data according to the first data generation rule, and send the first raw data to the first data service proxy module. The first data service proxy module is configured to receive the first data processing conversion rule and the first raw data, process the first raw data according to the first data processing conversion rule to obtain the first subscription data, and send the first subscription data to the first data service module.

It should be noted that the network data plane system according to an embodiment of the present disclosure establishes a unified network data plane system for different levels of data planes. For the whole life cycle of data in the network, the network data plane system defines the functional entities in each level of data planes, the data processing process of the functional entities, the design of standard data models and the standard collaborative process design of data processing. In an implementation, in the first-level data plane system, the defined functional entities that support the data plane include: the first data generation module, the first data service proxy module, the first data service module, and/or the like.

In an embodiment, the first data generation module is configured to generate data of network devices, and the generator produces the raw data according to the data generation rule issued by the data service module. The first data service proxy module processes the first raw data according to the first data processing conversion rule to obtain the first subscription data, i.e., standardized data. In an implementation, the first data processing conversion rule is defined according to the first data model, so as to stipulate data structure, dimension, time accuracy and other information.

Referring to FIG. 2, reference numeral "②" denotes the second control flow representing the process that the first data service module in the first-level data plane system interacts with the first data generation module, the first data service proxy module and the first application proxy module in the current level to control the data generation, storage and extraction in the current level data plane system.

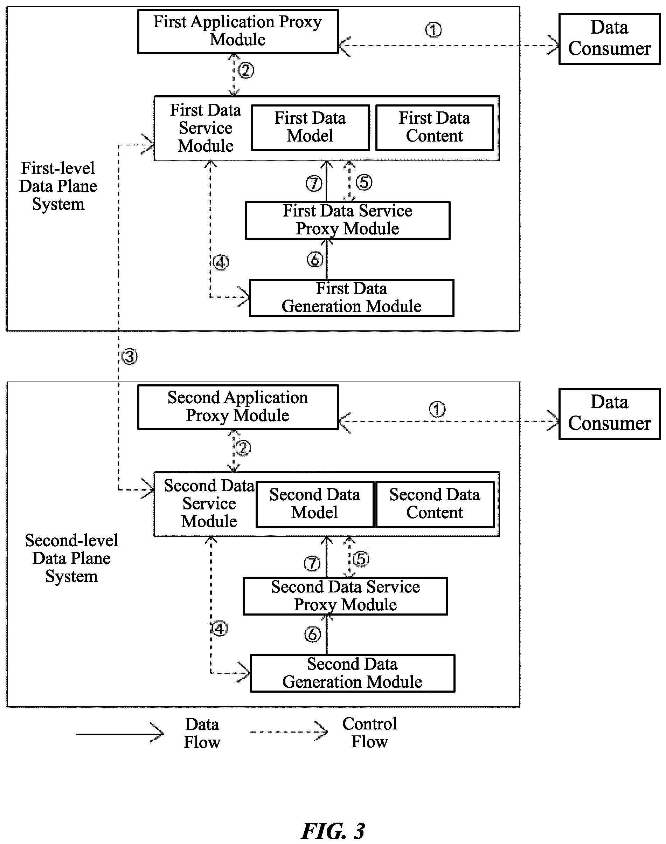

In some embodiments, referring to FIG. 3, the process of data subscription and collection is illustrated with the control flows with the sequence illustrated as follows. The reference numeral "①" denotes the first control flow that represents the data consumer sends the data subscription demand to the first application proxy module. The data subscription demand includes the object and content of data collection. The reference numeral "②" denotes the second control flow that represents the first application proxy module adapts the data subscription demand to the standard data subscription demand for the first data service module and sends the standard data subscription demand to the first data service module. The reference numeral "③" denotes the third control flow that represents that the first data service module generates a data acquisition task according to the standard data subscription demand, and determines whether the data acquisition task can be fulfilled by the data in the current level (i.e., the first level) data plane system, and whether additional data is needed from a lower level (i.e., the second level) data plane system. In the case where additional data from the lower level data plane system is needed, the standard data subscription demand is sent to the second-level data plane system. The reference numeral "④" denotes the fourth control flow that represents that a first data generation rule is generated according to the first data model and the standard data subscription demand, and the first data generation rule is sent to the first data generation module. The reference numeral "⑤" denotes the fifth control flow that represents that the first data service module generates a first data processing conversion rule according to the first data model and standard data subscription demand and sends the first data processing conversion rule to the first data service proxy module. The reference numeral "⑥" denotes the sixth data flow that represents that the first data generation module generates the first raw data according to the first data generation rule, and sends the first raw data to the first data service proxy module. The reference numeral "⑦" denotes the seventh data flow that represents that the first data service proxy module processes the first raw data according to the first data processing conversion rule to obtain the first subscription data, and sends the first subscription data to the first data service module. The first data service module stores and manages the first subscription data according to the first data model.

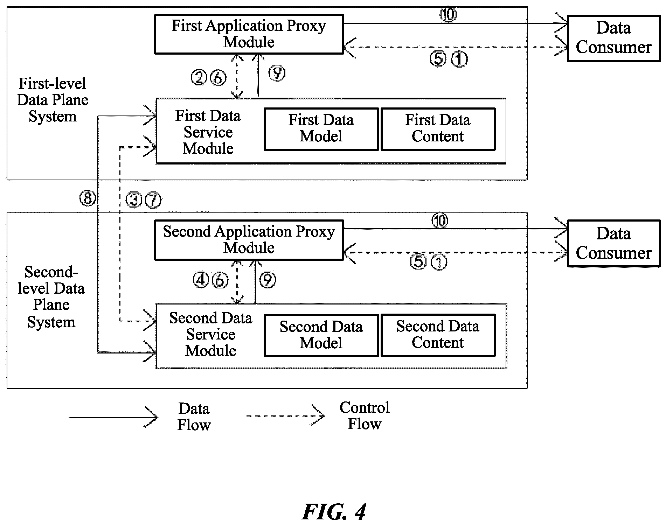

Referring to FIG. 4, the process of data customization and extraction is as follows. Reference numeral "①" denotes the first control flow representing that the data consumer sends the data customization demand to the first application proxy module. The data customization demand includes data object, structure, time, dimension and so on. Reference numeral "②" denotes the second control flow representing that the first application proxy module adapts the data customization demand to the standard data customization demand for the first data service module and sends the standard data customization demand to the first data service module. Reference numeral "③" denotes the third control flow representing that the first data service module generates and stores a data customization task according to the standard data customization demand, and determines whether the data customization task can be fulfilled by the data in the current level data plane system, and whether additional data in the lower level data plane system is needed. In response to determining additional data in the lower level data plane system is needed, the standard data customization demand is sent to the second-level data plane system. Reference numeral "④" denotes the fourth control flow representing that the first data service module generates the first data customization rule according to the standard data customization demand and the first data model, and sends the first data customization rule to the first application proxy module. Reference numeral " ⑤" denotes the fifth control flow representing that the data consumer sends a data extraction request to the first application proxy module. Reference numeral "⑥" denotes the sixth control flow representing that the first application proxy module adapts to the standard data extraction request of the first data service module according to the data extraction request, and sends the standard data extraction request to the first data service module. Reference numeral "⑦" denotes the seventh control flow representing that the first data service module generates a data extraction task according to the standard data extraction request, and determines whether the data extraction task can be fulfilled by the data in the current level data plane system, and whether additional data is needed from the lower level data plane system. In response to determining that additional data is needed from the lower level data plane system, the standard data extraction request is sent to the second-level data plane system. Reference numeral "⑧" denotes the eighth data flow representing that when the second data service module of the second-level data plane system receives the standard data extraction request sent by the first data service module, collects the second subscription data, which is the data needed, and sends the data to the first data service module. Reference numeral "⑨" denotes the ninth data flow representing that the first data service module collects each required data according to the data extraction task, and sends each required data, i.e., the first subscription data and the second subscription data, to the first application proxy module. Reference numeral "⑩" denotes the tenth data flow representing that the first application proxy module processes the first subscription data and the second subscription data according to the first data customization rule, so as to obtain customized data and send the customized data to the data consumer.

It should be noted that the second-level data plane system includes a second data service proxy module and a second data generation module. The second data service module is connected with the second data generation module and the second data service proxy module respectively. The second data generation module is connected with the second data service proxy module.

According to a second aspect of the present disclosure, referring to FIG. 1, a network data plane system is provided. The network data plane system includes a second-level data plane system that is in communicative connection with a first-level data plane system. The second-level data plane system includes: a second data service module, which is provided with a second data model, and is connected with a first data service module in the first-level data plane system to receive the standard data subscription demand and standard data extraction request sent by the first data service module. The second data service module is configured to acquire second subscription data according to the standard data subscription demand and the second data model, and to send the second subscription data to the first data service module according to the standard data extraction request.

It should be noted that after the second data service module sends the second subscription data to the first data service module according to the standard data extraction request, the first data service module sends the first subscription data of the current level data plane system and the second subscription data of the second-level data plane system to the first application proxy module, such that the first application proxy module obtains customized data according to the first subscription data and the second subscription data and sends the customized data to the data consumer.

It should be noted that the first-level data plane system includes a first application proxy module and a first data service module. The second-level data plane system further includes a second application proxy module. The first application proxy module is connected to the first data service module. The second application proxy module is connected to the second data service module. The first data service module is connected to the second data service module.

In an implementation, firstly, the first application proxy module receives the data subscription demand sent by the data consumer and generates standard data subscription demand according to the data subscription demand, and sends the standard data subscription demand to the first data service module, such that the first data service module determines whether to send the standard data subscription demand to the second data service module of the second-level data plane system according to the standard data subscription demand, such that the second data service module obtains the second subscription data according to the standard data subscription demand and the second data model. The first data service module further acquires the first subscription data according to the first data model and the standard data subscription demand, and sends the first subscription data to the first application proxy module. Secondly, the first application proxy module receives the data customization demand sent by the data consumer and generates standard data customization demand according to the data customization demand, and sends the standard data customization demand to the first data service module. Subsequently, the first data service module receives the standard data customization demand and generates a first data customization rule according to the standard data customization demand and the first data model, and sends the first data customization rule to the first application proxy module. Finally, the first application proxy module receives the data extraction request sent by the data consumer and generates a standard data extraction request according to the data extraction request, and sends the standard data extraction request to the first data service module. Subsequently, the first data service module further determines whether to send the standard data extraction request to the second data service module of the second-level data plane system according to the standard data subscription demand to obtain the second subscription data obtained by the second data service module according to the standard data subscription demand, and sends the second subscription data to the first application proxy module. The first application proxy module receives the first subscription data and the second subscription data and processes the first subscription data and the second subscription data according to the first data customization rule, so as to obtain customized data and send the customized data to data consumer.

In some embodiments, the first data service module in the first-level data plane system generates a data acquisition task according to the standard data subscription demand, determines whether the data acquisition task can be fulfilled by the data in the data plane system at the current level, i.e., the first level, and whether the data in the lower level (i.e., the second level) data plane system is needed. In response to a determination that the data in the current level can fulfill the task, the first data service module acquires the first subscription data according to the first data model and the standard data subscription demand, and sends the first subscription data to the first application proxy module. In response to a determination that the data in the lower level (i.e., the second level) data plane system, is needed, it is necessary to send the standard data subscription demand to the second-level data plane system, and obtain the first subscription data according to the first data model and the standard data subscription demand, and send the first subscription data to the first application proxy module. The first data service module generates the data extraction task according to the standard data extraction request, determines whether the data extraction task can be fulfilled through the data in the current level data plane system, and whether additional data in the lower level data plane system is needed. In response to a determination that the data in the current level can fulfill the task, the first data service module collects each required data according to the data extraction task and sends each required data to the first application proxy module. Then, the first application proxy module processes the required data according to the first data customization rule and sends the processed data to data consumer. In response to a determination that the data in the lower level data plane system is needed, it is necessary to send a standard data extraction request to the second-level data plane system to obtain each required data specified in the data extraction task from the second-level data plane system. Then, the data from the second-level data plane system and the required data in the current level data plane system are sent to the first application proxy module. The first application proxy module then processes all the required data according to the first data customization rule and sends the processed data to the data consumer. According to the present disclosure, the interpretation of the same data by data plane systems at different levels of the network can be aligned based on unified data model, thus data models and standardized processes at different network layers can be connected, the consistency and effectiveness of network data are improved, and the success rate of functional cooperation based on data interaction between different network layers is improved.

In some embodiments, the first data service module generates a data customization task according to the standard data customization demand and stores the data customization task. It is not necessary for the first data service module to send the standard data customization demand to the lower level data plane system, regardless of whether the data customization task requires the data from the lower level data plane system. Instead, the first data service module directly generates a first data customization rule according to the standard data customization demand and the first data model, and then sends the first data customization rule to the first application proxy module. In some other embodiments, the first data service module generates a data customization task according to the standard data customization demand and stores the data customization task, determines whether the data customization task can be fulfilled by the data in the current level data plane system and whether additional data from the lower level data plane system is needed. In response to a determination that the data in the current level data plane system can fulfill the task, the first data service module generates the first data customization rule according to the standard data customization demand and the first data model, and sends the first data customization rule to the first application proxy module. In response to a determination that additional data from the lower level data plane system is needed, it is necessary for the first data service module to send standard data customization demand to the second level data plane system.

In some embodiments, the second data service module is provided with a second data model and a second data content. Similarly, the first data service module is provided with a first data model and a first data content. The first data model is identical to the second data model, while the first data content is different from the second data content. Through this configuration, the interpretation of the same data by data plane systems at different levels of the network can be aligned based on a unified data model. With unified data models defined in the network data plane system, the data plane unifies the generation, storage, access and use standards of data in the network, providing efficient data services for network intelligence and network digital twin construction, and providing data foundation for the endogenous architecture of network intelligence. In another embodiment, the first-level data plane system and the second-level data plane system can be different level data plane systems of the same device or different level data plane systems across different devices.

In some embodiments, the network data plane system can include more data plane systems(s), in addition to the first-level data plane system and the second-level data plane system, and the present disclosure is not limited thereto. As shown in FIG. 5, the network data plane system includes three levels of data plane systems: a big data center of a telecommunication operator platform, a base station network manager/core network manager, and a base station/core network.

Referring to FIG. 2, reference numeral "①" denotes the first control flow representing that the interaction of data model between the data plane module of the higher-level network device in the network, i.e., the first data service module of the first-level data plane system and the data plane module of the lower-level network device, i.e., the second data service module of the second-level data plane system, to align the interpretation of data structure and content by different data plane systems. The data collaborative processing process of cross-layer network devices is unified through the interaction of data generation demands, data customization demands and data extraction demands. The data demands of data consumers of different network-level data plane systems are fulfilled through the interaction of data content. Reference numeral "③" denotes the third data flow representing that the second application proxy module interacts with different data consumers to adapt to the different data structures, formats and contents of different data consumers, and is responsible for the conversion between diversified data and standardized data.

It should be noted that data consumer can also send data subscription demand, data customization demand and data subscription demand from the second-level data plane system to the second application proxy module. The second application proxy module generates standard data subscription demand, standard data customization demand and standard data subscription demand respectively according to the data subscription demand, data customization demand and data subscription demand, and sends them to the second data service module respectively. Similarly, the second data service module obtains the required data of the data consumer and sends the required data to the second application proxy module, to allow the second application proxy module to obtains customized data according to the required data and send the customized data to the data consumer. In other words, the second application proxy module is also configured to forward, and adapt the interface between data services and data consumers, and is further configured to process and convert standardized data into data structures and contents required by data consumers.

Referring back to FIG. 1, in some embodiments, it can be understood that the second-level data plane system further includes a second data execution module (not shown). The second data execution module is connected with the second data service module. In such a case, the second data service module is further configured to generate a second data generation rule and a second data processing conversion rule according to a second data model and standard data subscription demand, and send the second data generation rule and the second data processing conversion rule to the second data execution module. The second data execution module is configured to generate the second subscription data according to the second data generation rule and the second data processing conversion rule and send the second subscription data to the second data service module.

It should be noted that the second data service module is configured for: managing the second data model, data generation and standardization processing, storage and management of data standardization data content, processing of data subscription and collection tasks, processing of data customization and extraction tasks, and interaction of data models, data generation demands, data customization demands, data extraction demands and data content among data services of devices at different levels of the network. After the second data execution module sends the processed standardized data, i.e., the second subscription data, to the second data service module, the second data service module stores and manages the second subscription data according to the second data model.

Referring to FIGS. 1 to 3, it can be understood that the second data execution module includes a second data service proxy module and a second data generation module. The second data service module is connected with the second data generation module and the second data service proxy module respectively. The second data generation module is connected with the second data service proxy module. The second data generation module is configured to receive a second data generation rule, generate second raw data according to the second data generation rule, and send the second raw data to the second data service proxy module. The second data service proxy module is configured to receive the second data processing conversion rule and the second raw data, process the second raw data according to the second data processing conversion rule to obtain the second subscription data, and send the second subscription data to the second data service module.

It should be noted that the network data plane system according to an embodiment of the present disclosure establishes a unified network data plane system for different levels of data planes. For the whole life cycle of data in the network, the network data plane system defines the functional entities in each level of data planes, the data processing process of the functional entities, the design of standard data models and the standard collaborative process design of data processing. In an implementation, in the second-level data plane system, the defined functional entities that support the data plane include: the second data generation module, the second data service proxy module, and the second data service module.

In an embodiment, the second data generation module is configured to generate data of network devices, and the generator produces the raw data according to the data generation rule issued by the data service module. The second data service proxy module processes the second raw data according to the second data processing conversion rule to obtain the second subscription data, i.e., standardized data. In an implementation, the second data processing conversion rule is defined according to the second data model, so as to stipulate data structure, dimension, time accuracy and other information.

It should be noted that the first-level data plane system includes a first data service proxy module and a first data generation module. The first data service module is connected with the first data generation module and the first data service proxy module respectively. The first data generation module is connected with the first data service proxy module.

Referring to FIG. 2, reference numeral "②" denotes the second control flow, which represents the process that the second data service module in the second-level data plane system interacts with the second data generation module, the second data service proxy module and the second application proxy module in the current level to control the data generation, storage and extraction in current level data plane system.

In some embodiments, referring to FIG. 3, the process of data subscription and collection by the data consumer from the second-level data plane system is illustrated with the control flows with the sequence illustrated as follows. The reference numeral "①" denotes the first control flow that represents the data consumer sends the data subscription demand to the second application proxy module. The data subscription demand includes the object and content of data collection. The reference numeral "②" denotes the second control flow that represents the second application proxy module adapts the data subscription demand to the standard data subscription demand for the second data service module and sends the standard data subscription demand to the second data service module. The reference numeral "③" denotes the third control flow that represents that the second data service module generates a data acquisition task according to the standard data subscription demand, and determines whether the data acquisition task can be fulfilled by the data in the current level (i.e., the second level) data plane system, and whether additional data is needed from a higher level (i.e., the first level) data plane system. In the case where additional data from the higher level data plane system is needed, the standard data subscription demand is sent to the first-level data plane system. The reference numeral "④" denotes the fourth control flow that represents that a second data generation rule is generated according to the second data model and the standard data subscription demand, and the second data generation rule is sent to the second data generation module. The reference numeral "⑤" denotes the fifth control flow that represents that the second data service module generates a second data processing conversion rule according to the second data model and standard data subscription demand and sends the second data processing conversion rule to the second data service proxy module. The reference numeral "⑥" denotes the sixth data flow that represents that the second data generation module generates the second raw data according to the second data generation rule, and sends the second raw data to the second data service proxy module. The reference numeral "⑦" denotes the seventh data flow that represents that the second data service proxy module processes the second raw data according to the second data processing conversion rule to obtain the second subscription data, and sends the second subscription data to the second data service module. The second data service module stores and manages the second subscription data according to the second data model.

In some embodiments, referring to FIG. 4, the process of data customization and extraction by the data consumer from the second-level data plane system is as follows. Reference numeral "①" denotes the first control flow representing that the data consumer sends data customization demand to the second application proxy module. The data customization demand includes data objects, structures, time, dimensions, or the like. Reference numeral "②" denotes the second control flow representing that the second application proxy module adapts the data customization demand to the standard data customization demand for the second data service module and sends the standard data customization demand to the second data service module. Reference numeral "③" denotes the third control flow representing that the second data service module generates and stores the data customization task according to the standard data customization demand, and determines whether the data customization task can be fulfilled by the data in the current level data plane system, and whether additional data is needed from the higher-level the data plane system. In response to determining that additional data is needed from the higher-level data plane system, the standard data customization demand is sent to the first-level data plane system. Reference numeral "④" denotes the fourth control flow representing that the second data service module generates the second data customization rule according to the standard data customization demand and the second data model, and sends the second data customization rule to the second application proxy module. Reference numeral " ⑤" denotes the fifth control flow representing that the data consumer sends a data extraction request to the second application proxy module. Reference numeral " ⑥" denotes the sixth control flow representing that the second application proxy module adapts to the standard data extraction request for the second data service module according to the data extraction request, and sends the standard data extraction request to the second data service module. Reference numeral "⑦" denotes the seventh control flow representing that the second data service module generates a data extraction task according to the standard data extraction request, and determines whether the data extraction task can be fulfilled by the data in the current level data plane system, and whether additional data is needed from the higher-level data plane system. In response to determining that additional data is needed from the higher-level data plane system, the second data service module sends a standard data extraction request to the first-level data plane system. Reference numeral " ⑧" denotes the eighth data flow representing that in the case that the first data service module of the first-level data plane system receives the standard data extraction request sent by the second data service module, the first data service module collects the first subscription data, which is the data needed, and sends the data to the second data service module. Reference numeral "⑨" denotes the ninth data flow representing that the second data service module collects each required data according to the data extraction task, and sends each required data, i.e., the second subscription data and the first subscription data, to the second application proxy module. Reference numeral "⑩" denotes the tenth data flow representing that the second application proxy module processes the second subscription data and the first subscription data according to the second data customization rule, so as to obtain customized data and send the customized data to the data consumer.

According to a third aspect of the present disclosure, a method for data interaction for a network data plane system is provided. The method is applied to the first-level data plane system in the network data plane system. Referring to FIGS. 1 to 3 and 6, the first-level data plane system includes a first application proxy module, and a first data service module. The first data service module is provided with a first data model, and is connected with the first application proxy module.

The method includes but is not limited to the following operations.

At operation S100, a standard data subscription demand sent by a data consumer is sent to a first data service module through a first application proxy module.

At operation S200, the standard data subscription demand is received by the first data service module, and the standard data subscription demand is sent to a second-level data plane system according to the standard data subscription demand, and first subscription data is acquired according to the first data model and the standard data subscription demand.

At operation S300, the standard data extraction request sent by the data consumer is sent to the first data service module through the first application proxy module.

At operation S400, the standard data extraction request is received by the first data service module, and is sent to the second-level data plane system by the first data service module according to the standard data extraction request to acquire the second subscription data obtained by the second-level data plane system according to the standard data subscription demand, and the first subscription data and the second subscription data are sent to the first application proxy module.

At operation S500, the first subscription data and the second subscription data are received by the first application proxy module, to acquire customized data according to the first subscription data and the second subscription data, and the customized data is sent to the data consumer.

In some embodiments, the first data service module generates a data acquisition task according to the standard data subscription demand, determines whether the data acquisition task can be fulfilled by the data in the data plane system at the current level, i.e., the first level, and whether the data in the lower level (i.e., the second level) data plane system is needed. In response to a determination that the data in the current level can fulfill the task, the first data service module acquires the first subscription data according to the first data model and the standard data subscription demand, and sends the first subscription data to the first application proxy module. In response to a determination that the data in the lower level (i.e., the second level) data plane system, is needed, it is necessary to send the standard data subscription demand to the second-level data plane system, and obtain the first subscription data according to the first data model and the standard data subscription demand, and send the first subscription data to the first application proxy module. The first data service module generates the data extraction task according to the standard data extraction request, determines whether the data extraction task can be fulfilled through the data in the current level data plane system, and whether additional data in the lower level data plane system is needed. In response to a determination that the data in the current level can fulfill the task, the first data service module collects each required data according to the data extraction task and sends each required data to the first application proxy module. Then, the first application proxy module processes the required data according to the first data customization rule and sends the processed data to data consumer. In response to a determination that the data in the lower level data plane system is needed, it is necessary to send a standard data extraction request to the second-level data plane system to obtain each required data specified in the data extraction task from the second-level data plane system. Then, the data from the second-level data plane system and the required data in the current level data plane system are sent to the first application proxy module. The first application proxy module then processes the required data according to the first data customization rule and sends the processed data to the data consumer.

In some implementations, the first-level data plane system is a higher-level network equipment data plane module, whereas the second-level data plane system is a lower-level network equipment data plane module. The second-level data plane system includes a second application proxy module and a second data service module. The first application proxy module is connected with the first data service module. The second application proxy module is connected with the second data service module. The first data service module is connected with the second data service module. The first data service module is provided with a first data model and a first data content. Similarly, the second data service module is provided with a second data model and a second data content. The first data model is identical to the second data model, while the first data content is different from the second data content. Through this configuration, the interpretation of the same data by data plane systems at different levels of the network can be aligned based on a unified data model. With unified data models defined in the network data plane system, the data plane unifies the generation, storage, access and use standards of data in the network, providing efficient data services for network intelligence and network digital twin construction, and providing data foundation for the endogenous architecture of network intelligence. In another embodiment, the first-level data plane system and the second-level data plane system can be different level data plane systems of the same device or different level data plane systems across different devices.

According to the present disclosure, the interpretation of the same data by data plane systems at different levels of the network can be aligned based on a unified data model, thus data models and standardized processes at different network layers can be connected, the consistency and effectiveness of network data are improved, and the success rate of functional cooperation based on data interaction between different network layers is improved.

In some embodiments, the network data plane system can include more data plane systems(s), in addition to the first-level data plane system and the second-level data plane system, and the present disclosure is not limited thereto. As shown in FIG. 5, the network data plane system includes three levels of data plane systems: a big data center of a telecommunication operator platform, a base station network manager/core network manager, and a base station/core network.

In an embodiment, the first application proxy module is configured to forward, and adapt the interface between data services and data consumers, and is further configured to process and convert standardized data such as first subscription data and second subscription data into data structures and contents required by data consumers.

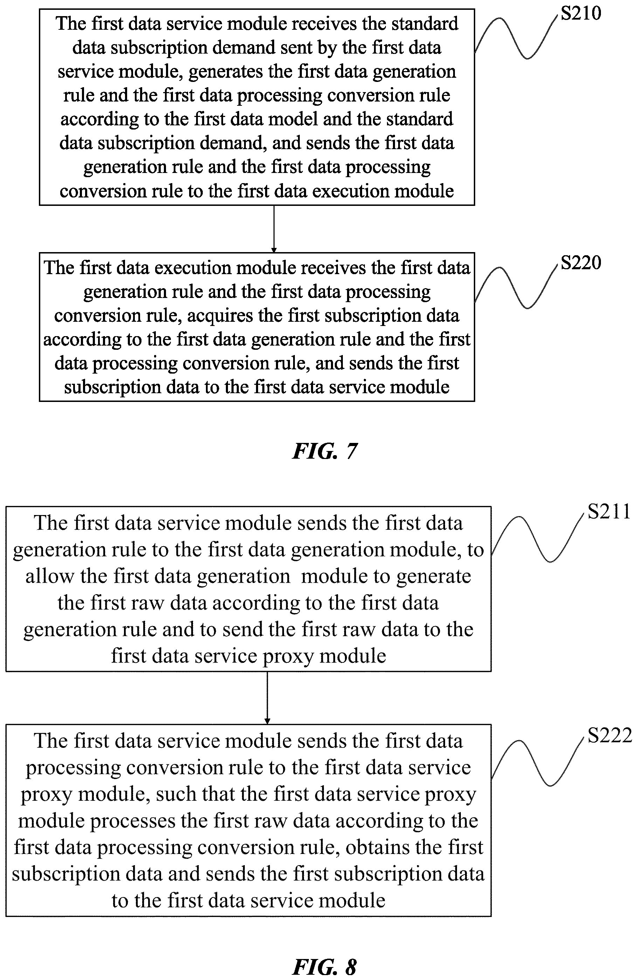

Referring to FIGS. 1 and 7, it can be understood that the first-level data plane system further includes a first data execution module connected with the first data service module. In such a case, the operation in S200 where the first subscription data is obtained according to the first data model and standard data subscription demand, includes but is not limited to the following operations.

At operation S210, the standard data subscription demand sent by the first data service module is received by the first data service module, the first data generation rule and the first data processing conversion rule are generated according to the first data model and the standard data subscription demand, and the first data generation rule and the first data processing conversion rule are sent to the first data execution module.

At operation S220, the first data generation rule and the first data processing conversion rule are received by the first data execution module, and the first subscription data is obtained according to the first data generation rule and the first data processing conversion rule, and the first subscription data is sent to the first data service module.

It should be noted that the first data service module is configured for: managing the first data model, data generation and standardization processing, storage and management of data standardization data content, processing of data subscription and collection tasks, processing of data customization and extraction tasks, and interaction of data models, data generation demands, data customization demands, data extraction demands and data content among data services of devices at different levels of the network. After the first data execution module sends the processed standardized data, i.e., the first subscription data, to the first data service module, the first data service module stores and manages the first subscription data according to the first data model.

Referring to FIGS. 1 to 3 and 8, it can be understood that the first data execution module includes a first data service proxy module and a first data generation module. The first data service module is connected with the first data generation module and the first data service proxy module respectively. The first data generation module is connected with the first data service proxy module. In such a case, operation S220 includes but is not limited to the following operations.

At operation S221, the first data generation rule is sent to the first data generation module through the first data service module, to allow the first data generation module to generate the first raw data according to the first data generation rule and to send the first raw data to the first data service proxy module.

At operation S222, the first data processing conversion rule is sent to the first data service proxy module through the first data service module, to allow the first data service proxy module to process the first raw data according to the first data processing conversion rule to obtain the first subscription data and to send the first subscription data to the first data service module.

It should be noted that the network data plane system according to an embodiment of the present disclosure establishes a unified network data plane system for different levels of data planes. For the whole life cycle of data in the network, the network data plane system defines the functional entities in each level of data planes, the data processing process of the functional entities, the design of standard data models and the standard collaborative process design of data processing. In an implementation, in the first-level data plane system, the defined functional entities that support the data plane include: the first data generation module, the first data service proxy module, the first data service module and the like.

In an embodiment, the first data generation module is configured to generate data of network devices, and the generator produces the raw data according to the data generation rule issued by the data service module. The first data service proxy module processes the first raw data according to the first data processing conversion rule to obtain the first subscription data, i.e., standardized data. In an implementation, the first data processing conversion rule is defined according to the first data model, so as to stipulate data structure, dimension, time accuracy and other information.

Referring to FIG. 2, reference numeral "②" denotes the second control flow representing the process that the first data service module in the first-level data plane system interacts with the first data generation module, the first data service proxy module and the first application proxy module in the current level to control the data generation, storage and extraction in the current level data plane system.

It should be noted that the second-level data plane system includes a second data service proxy module and a second data generation module. The second data service module is connected with the second data generation module and the second data service proxy module respectively. The second data generation module is connected with the second data service proxy module.

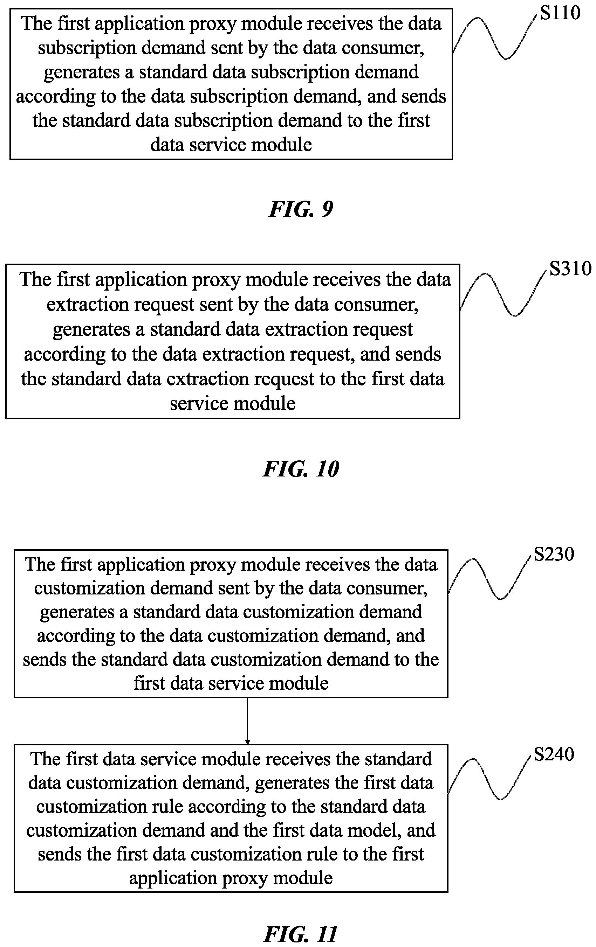

Referring to FIG. 9, operation S100 includes but is not limited to the following operation.

At operation S110, the data subscription demand sent by the data consumer is received by the first application proxy module, a standard data subscription demand is generated according to the data subscription demand, and the standard data subscription demand is sent to the first data service module.

Referring to FIG. 10, operation S300 includes but is not limited to the following operation.

At operation S310, the data extraction request sent by the data consumer is received by the first application proxy module, a standard data extraction request is generated according to the data extraction request, and the standard data extraction request is sent to the first data service module.

In an embodiment, the data subscription demand sent by the data consumer to the first application proxy module includes the objects and contents of data collection.

Referring to FIG. 11, it can be understood that before operation S300, the method includes but is not limited to the following operations.

At operation S230, the data customization demand sent by the data consumer is received by the first application proxy module, a standard data customization demand is generated according to the data customization demand, and the standard data customization demand is sent to the first data service module.

At operation S240, the standard data customization demand is received through the first data service module, the first data customization rule is generated by the first data service module according to the standard data customization demand and the first data model, and the first data customization rule is sent by the first data service module to the first application proxy module.

It should be noted that the data customization demand sent by the data consumer to the first application proxy module includes data object, structure, time, dimension and so on.

In some embodiments, the first data service module generates a data customization task according to the standard data customization demand and stores the data customization task. It is not necessary for the first data service module to send the standard data customization demand to the lower level data plane system, regardless of whether the data customization task requires the data from the lower level data plane system. Instead, the first data service module directly generates a first data customization rule according to the standard data customization demand and the first data model, and then sends the first data customization rule to the first application proxy module. In some other embodiments, the first data service module generates a data customization task according to the standard data customization demand and stores the data customization task, determines whether the data customization task can be fulfilled by the data in the current level data plane system and whether additional data from the lower level data plane system is needed. In response to a determination that the data in the current level data plane system can fulfill the task, the first data service module generates the first data customization rule according to the standard data customization demand and the first data model, and sends the first data customization rule to the first application proxy module. In response to a determination that additional data from the lower level data plane system is needed, it is necessary for the first data service module to send standard data customization demand to the second level data plane system.

In an embodiment, when the network data plane system is defined, the data plane runs through different device levels and different protocol stacks. Data service module(s) is/are provided in each level of device to manage the data produced or stored by the data plane system at current level, and provide data capabilities for data consumers at the current level and network nodes at higher levels. The data service module includes functionalities such as data acquisition, data preprocessing, data storage, data access, data exposure, data collaboration and the like.

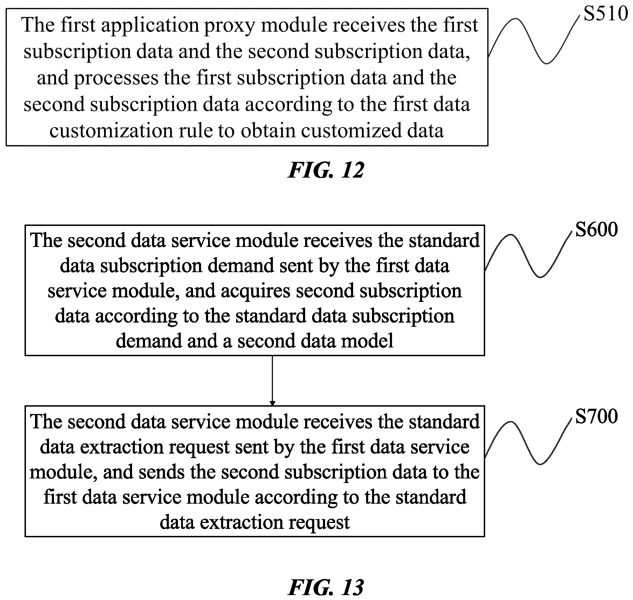

Referring to FIG. 12, it can be understood that the operation in S500 where the first subscription data and the second subscription data are received through the first application proxy module and customized data is acquired according to the first subscription data and the second subscription data includes but is not limited to the following operation.

At operation S510, the first subscription data and the second subscription data are received by the first application proxy module, and the first subscription data and the second subscription data are processed by the first application proxy module according to the first data customization rule to obtain customized data.

In some embodiments, referring to FIG. 3, the process of data subscription and collection is illustrated with the control flows with the sequence illustrated as follows. The reference numeral "①" denotes the first control flow that represents the data consumer sends the data subscription demand to the first application proxy module. The data subscription demand includes the object and content of data collection. The reference numeral "②" denotes the second control flow that represents the first application proxy module adapts the data subscription demand to the standard data subscription demand for the first data service module and sends the standard data subscription demand to the first data service module. The reference numeral "③" denotes the third control flow that represents that the first data service module generates a data acquisition task according to the standard data subscription demand, and determines whether the data acquisition task can be fulfilled by the data in the current level (i.e., the first level) data plane system, and whether additional data is needed from a lower level (i.e., the second level) data plane system. In the case where additional data from the lower level data plane system is needed, the standard data subscription demand is sent to the second-level data plane system. The reference numeral "④" denotes the fourth control flow that represents that a first data generation rule is generated according to the first data model and the standard data subscription demand, and the first data generation rule is sent to the first data generation module. The reference numeral "⑤" denotes the fifth control flow that represents that the first data service module generates a first data processing conversion rule according to the first data model and standard data subscription demand and sends the first data processing conversion rule to the first data service proxy module. The reference numeral "⑥" denotes the sixth data flow that represents that the first data generation module generates the first raw data according to the first data generation rule, and sends the first raw data to the first data service proxy module. The reference numeral "⑦" denotes the seventh data flow that represents that the first data service proxy module processes the first raw data according to the first data processing conversion rule to obtain the first subscription data, and sends the first subscription data to the first data service module. The first data service module stores and manages the first subscription data according to the first data model.

Referring to FIG. 4, the process of data customization and extraction is as follows. Reference numeral "①" denotes the first control flow representing that the data consumer sends the data customization demand to the first application proxy module. The data customization demand includes data object, structure, time, dimension and so on. Reference numeral "②" denotes the second control flow representing that the first application proxy module adapts the data customization demand to the standard data customization demand for the first data service module and sends the standard data customization demand to the first data service module. Reference numeral "③" denotes the third control flow representing that the first data service module generates and stores data customization tasks according to the standard data customization demand, and determines whether the data customization task can be fulfilled by the data in the current level data plane system, and whether additional data in the lower level data plane system is needed. In response to determining additional data in the lower level data plane system is needed, the standard data customization demand is sent to the second-level data plane system. Reference numeral "④" denotes the fourth control flow representing that the first data service module generates the first data customization rule according to the standard data customization demand and the first data model, and sends the first data customization rule to the first application proxy module. Reference numeral "⑤" denotes the fifth control flow representing that the data consumer sends a data extraction request to the first application proxy module. Reference numeral "⑥" denotes the sixth control flow representing that the first application proxy module adapts to the standard data extraction request of the first data service module according to the data extraction request, and sends the standard data extraction request to the first data service module. Reference numeral "⑦" denotes the seventh control flow representing that the first data service module generates a data extraction task according to the standard data extraction request, and determines whether the data extraction task can be fulfilled by the data in the current level data plane system, and whether additional data is needed from the lower level data plane system. In response to determining that additional data is needed from the lower level data plane system, the standard data extraction request is sent to the second-level data plane system. Reference numeral "⑧" denotes the eighth data flow representing that when the second data service module of the second-level data plane system receives the standard data extraction request sent by the first data service module, collects the second subscription data, which is the data needed, and sends the data to the first data service module. Reference numeral "⑨" denotes the ninth data flow representing that the first data service module collects each required data according to the data extraction task, and sends each required data, i.e., the first subscription data and the second subscription data, to the first application proxy module. Reference numeral "⑩" denotes the tenth data flow representing that the first application proxy module processes the first subscription data and the second subscription data according to the first data customization rule, so as to obtain customized data and send the customized data to the data consumer.

According to a fourth aspect of the present disclosure, a method for data interaction for a network data plane system is provided. The method is applied to a second-level data plane system in the network data plane system. The second-level data plane system is in communicative connection with a first-level data plane system. As shown in FIGS. 1-3 and 13, the second-level data plane system includes a second data service module provided with a second data model. The second data service module is connected with a first data service module in the first-level data plane system.

The method includes but is not limited to the following operations.

At operation S600, the standard data subscription demand sent by the first data service module is received by the second data service module, and second subscription data is acquired according to the standard data subscription demand and a second data model.

At operation S700, the standard data extraction request sent by the first data service module is received by the second data service module, and the second subscription data is sent to the first data service module according to the standard data extraction request.

It should be noted that the first-level data plane system includes a first application proxy module and a first data service module. The second-level data plane system further includes a second application proxy module. The first application proxy module is connected to the first data service module. The second application proxy module is connected to the second data service module. The first data service module is connected to the second data service module.

In this embodiment, the first data service module in the first-level data plane system sends a standard data subscription demand to the second-level data plane system according to the standard data subscription demand sent by the first application proxy module, and obtains the first subscription demand according to the first data model and the standard data subscription demand. The second data service module of the second-level data plane system obtains the second subscription demand according to the standard data subscription demand and the second data model, and sends the second subscription data to the first data service module according to the standard data extraction request. The first data service module then sends a standard data extraction request to the second-level data plane system according to the standard data extraction request sent by the first application proxy module to obtain the second subscription data from the second-level data plane system, and sends the first subscription data and the second subscription data to the first application proxy module, such that the first application proxy module processes the first subscription data and the second subscription data according to the first data customization rule to generate customized data and sends the customized data to the data consumer. According to the present disclosure, the interpretation of the same data by data plane systems at different levels of the network can be aligned based on a unified data model, thus data models and standardized processes at different network layers can be connected, the consistency and effectiveness of network data are improved, and the success rate of functional cooperation based on data interaction between different network layers is improved.

In some implementations, the acquisition of the first data customization rule includes the following operations before the first application proxy module sends the standard data extraction request to the first data service module. The first application proxy module receives the data customization demand sent by the data consumer, generates the standard data customization demand according to the data customization demand, and sends the standard data customization demand to the first data service module. Then, the first data service module receives a standard data customization demand, generates a first data customization rule according to the standard data customization demand and a first data model, and sends the first data customization rule to the first application proxy module.

In some embodiments, the second data service module is provided with a second data model and a second data content. Similarly, the first data service module is provided with a first data model and a first data content. The first data model is identical to the second data model, while the first data content is different from the second data content. Through this configuration, the interpretation of the same data by data plane systems at different levels of the network can be aligned based on a unified data model. With unified data models defined in the network data plane system, the data plane unifies the generation, storage, access and use standards of data in the network, providing efficient data services for network intelligence and network digital twin construction, and providing data foundation for the endogenous architecture of network intelligence. In another embodiment, the first-level data plane system and the second-level data plane system can be different level data plane systems of the same device or different level data plane systems across different devices.

In some embodiments, the network data plane system can include more data plane systems(s), in addition to the first-level data plane system and the second-level data plane system, and the present disclosure is not limited thereto. As shown in FIG. 5, the network data plane system includes three levels of data plane systems: a big data center of a telecommunication operator platform, a base station network manager/core network manager, and a base station/core network.

Referring to FIG. 2, reference numeral "①" denotes the first control flow representing that the interaction of data model between the data plane module of the higher-level network device in the network, i.e., the first data service module of the first-level data plane system and the data plane module of the lower-level network device, i.e., the second data service module of the second-level data plane system, to align the interpretation of data structure and content by different data plane systems. The data collaborative processing process of cross-layer network devices is unified through the interaction of data generation demands, data customization demands and data extraction demands. The data demands of data consumers of different network-level data plane systems are fulfilled through the interaction of data content. Reference numeral "③" denotes the third data flow representing that the second application proxy module interacts with different data consumers to adapt to the different data structures, formats and contents of different data consumers, and is responsible for the conversion between diversified data and standardized data.

It should be noted that data consumer can also send data subscription demand, data customization demand and data subscription demand from the second-level data plane system to the second application proxy module. The second application proxy module generates standard data subscription demand, standard data customization demand and standard data subscription demand respectively according to the data subscription demand, data customization demand and data subscription demand, and sends them to the second data service module respectively. Similarly, the second data service module obtains the required data of the data consumer and sends the required data to the second application proxy module, to allow the second application proxy module to obtain customized data according to the required data and send the customized data to the data consumer. In other words, the second application proxy module is also configured to forward, and adapt the interface between data services and data consumers, and is further configured to process and convert standardized data into data structures and contents required by data consumers.

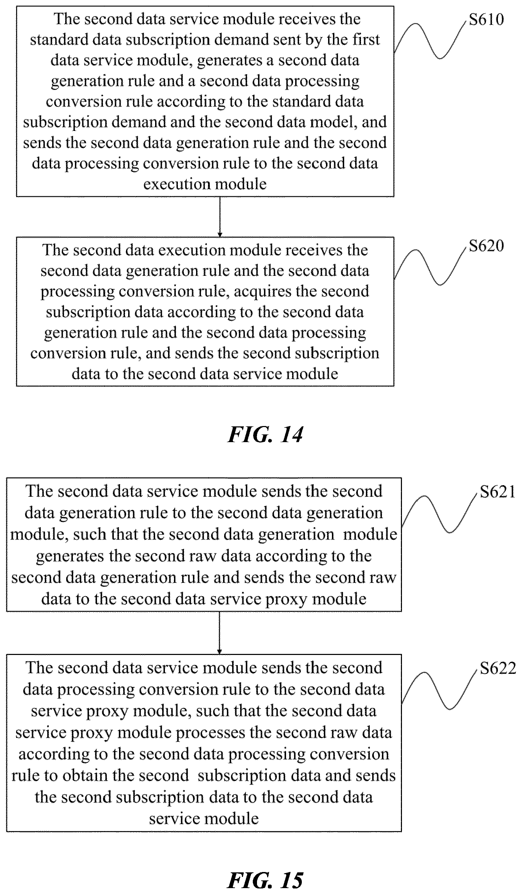

Referring to FIGS. 1 and 14, it can be understood that the second-level data plane system further includes a second data execution module connected with the second data service module. In such a case, the operation in S600 where the second subscription data is obtained according to the standard data subscription demand and the second data model, includes but is not limited to the following operations.

At operation S610, the standard data subscription demand sent by the first data service module is received through the second data service module, a second data generation rule and a second data processing conversion rule are generated by the second data service module according to the standard data subscription demand and the second data model, and the second data generation rule and the second data processing conversion rule are sent by the second data service module to the second data execution module.

At operation S620, the second data generation rule and the second data processing conversion rule are received by the second data execution module, and the second subscription data is obtained according to the second data generation rule and the second data processing conversion rule, and the second subscription data is sent to the second data service module.

In some embodiments, the first-level data plane system further includes a first data execution module connected with the first data service module.

In some embodiments, the first data service module in the first-level data plane system sends a standard data subscription demand to the second-level data plane system according to the standard data subscription demand sent by a first application proxy module, generates a first data generation rule and a first data processing conversion rule according to a first data model and the standard data subscription demand, and sends the first data generation rule and the first data processing conversion rule to the first data execution module. The first data execution module obtains first subscription data according to a first data generation rule and the first data processing conversion rule and sends the first subscription data to the first data service module. The second data service module of the second-level data plane system generates a second data generation rule and a second data processing conversion rule according to the standard data subscription demand and the second data model, and sends the second data generation rule and the second data processing conversion rule to the second data execution module. The second data execution module is configured to obtain the second subscription data according to the second data generation rule and the second data processing conversion rule and send the second subscription data to the second data service module, such that the second data service module sends the second subscription data to the first data service module according to the standard data extraction request. The first data service module sends a standard data extraction request to the second-level data plane system according to the standard data extraction request sent by the first application proxy module to obtain the second subscription data from the second-level data plane system, and sends the first subscription data and the second subscription data to the first application proxy module, such that the first application proxy module processes the first subscription data and the second subscription data according to the first data customization rule to generate customized data and sends the customized data to the data consumer.

It should be noted that the second data service module is configured for: managing the second data model, data generation and standardization processing, storage and management of data standardization data content, processing of data subscription and collection tasks, processing of data customization and extraction tasks, and interaction of data models, data generation demands, data customization demands, data extraction demands and data content among data services of devices at different levels of the network. After the second data execution module sends the processed standardized data, i.e., the second subscription data, to the second data service module, the second data service module stores and manages the second subscription data according to the second data model.

Referring to FIGS. 1 to 3 and 15, it can be understood that the second data execution module includes a second data service proxy module and a second data generation module. The second data service module is connected with the second data generation module and the second data service proxy module respectively. The second data generation module is connected with the second data service proxy module. In such a case, operation S620 includes but is not limited to the following operations.

At operation S621, the second data generation rule is sent to the second data generation module through the second data service module, to allow the second data generation module to generate the second raw data according to the second data generation rule and to send the second raw data to the second data service proxy module.

At operation S622, the second data processing conversion rule is sent to the second data service proxy module through the second data service module, to allow the second data service proxy module to process the second raw data according to the second data processing conversion rule to obtain the second subscription data and to send the second subscription data to the second data service module.

It should be noted that the network data plane system according to an embodiment of the present disclosure establishes a unified network data plane system for different levels of data planes. For the whole life cycle of data in the network, the network data plane system defines the functional entities in each level of data planes, the data processing process of the functional entities, the design of standard data models and the standard collaborative process design of data processing. In an implementation, in the second-level data plane system, the defined functional entities that support the data plane include: the second data generation module, the second data service proxy module, and the second data service module.

In an embodiment, the second data generation module is configured to generate data of network devices, and the generator produces the raw data according to the data generation rule issued by the data service module. The second data service proxy module processes the second raw data according to the second data processing conversion rule to obtain the second subscription data, i.e., standardized data. In an implementation, the second data processing conversion rule is defined according to the second data model, so as to stipulate data structure, dimension, time accuracy and other information.

It should be noted that the first-level data plane system further includes a first data service proxy module and a first data generation module. The first data service module is connected with the first data generation module and the first data service proxy module respectively. The first data generation module is connected with the first data service proxy module.

According to an embodiment of the present disclosure, a method for data interaction for a network data plane system is provided. The method is applied to the network data plane system. Referring to FIGS. 1 to 3, the network data plane system includes a first-level data plane system and a second-level data plane system, which are in communicative connection. The first-level data plane system includes a first application proxy module and a first data service module. The first data service module is provided with a first data model and is connected with the first application proxy module. The second-level data plane system includes a second data service module. The second data service module is provided with a second data model, and is connected with the first data service module in the first-level data plane system. The method includes:
the first-level data plane system performs the method for data interaction for the network data plane system of the third aspect; correspondingly, the second-level data plane system performs the method for data interaction for the network data plane system of the fourth aspect.

According to a fifth aspect of the present disclosure, a network data plane system is provided. The system includes a memory, a processor and a computer program stored in the memory and executable by the processor.

The processor and the memory may be connected by a bus or other means.

As a non-transitory computer-readable storage medium, the memory can be configured to store non-transitory software programs and non-transitory computer-executable programs. In addition, the memory may include high-speed random access memory and non-transitory memory, such as at least one disk memory device, flash memory device, or other non-transitory solid-state memory devices. In some embodiments, the memory may include memories remotely located with respect to the processor, and these remote memories may be connected to the processor through a network. Examples of the above networks include, but are not limited to, the Internet, intranet, local area network, mobile communication network, and combinations thereof.

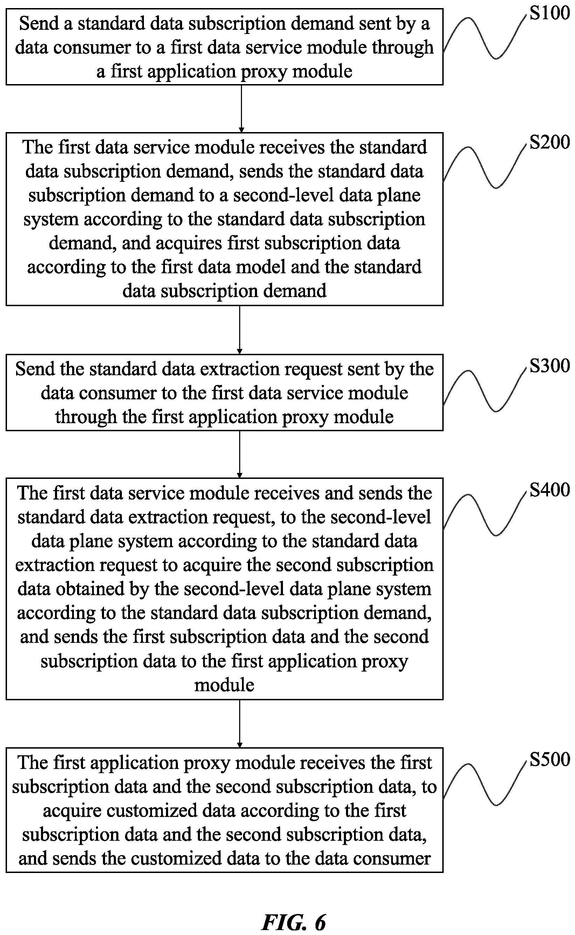

Non-transitory software programs and instructions of the method for data interaction described in the above embodiments are stored in a memory which, when executed by a processor, cause the processor to carry out operations of the method for data interaction according to the third aspect of the present disclosure described above, for example, the above-described operations S100 to S500 described in conjunction with FIG. 6, S210 to S220 described in conjunction with FIG. 7, S221 to S222 described in conjunction with FIG. 8, S110 described in conjunction with FIG. 9, S310 described in conjunction with FIG. 10, S230 to S240 described in conjunction with FIG. 11, or S510 described in conjunction with FIG. 12.

Non-transitory software programs and instructions of the method for data interaction described in the above embodiments are stored in a memory which, when executed by a processor, cause the processor to carry out operations of the method for data interaction according to the fourth aspect of the present disclosure described above, for example, the above-described operations S600 to S700 described in conjunction with FIG. 13, S610 to S620 described in conjunction with FIG. 14, or S621 to S622 described in conjunction with FIG. 15.

The above-described embodiments are only schematic, in which the units illustrated as separate components may or may not be physically separated, that is, the device may be located in one place or distributed over several network units. Some or all of the modules can be selected according to the practical needs to achieve the purpose of this embodiment.

According to yet another embodiment of the present disclosure, a computer-readable storage medium is provided. The computer-readable storage medium stores computer-executable instructions which, when executed by a processor or controller, for example, by a processor in the embodiment of the electronic device, causes the processor to carry out the operations of the methods described above, for example, the above-described operations S100 to S500 described in conjunction with FIG. 6, S210 to S220 described in conjunction with FIG. 7, S221 to S222 described in conjunction with FIG. 8, S110 described in conjunction with FIG. 9, S310 described in conjunction with FIG. 10, S230 to S240 described in conjunction with FIG. 11, S510 described in conjunction with FIG. 12, S600 to S700 described in conjunction with FIG. 13, S610 to S620 described in conjunction with FIG. 14, or S621 to S622 described in conjunction with FIG. 15.

According to an embodiment of the present disclosure, the first data service module in the first-level data plane system sends a standard data subscription demand to the second-level data plane system according to the standard data subscription demand sent by a first application proxy module, and obtains first subscription data according to the first data model and the standard data subscription demand. The first data service module further sends a standard data extraction request to the second-level data plane system according to the standard data extraction request sent by the first application proxy module to obtain the second subscription data obtained by the second-level data plane system according to the standard data subscription demand, and sends the first subscription data and the second subscription data to the first application proxy module, such that the first application proxy module obtains customized data according to the first subscription data and the second subscription data and sends the customized data to the data consumer. According to the present disclosure, the interpretation of the same data by data plane systems at different levels of the network can be aligned, data models and standardized processes at different network layers can be connected, the consistency and effectiveness of network data are improved, and the success rate of functional cooperation based on data interaction between different network layers is improved.

It shall be appreciated by a person having ordinary skills in the art that all or some of the operations and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description for several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A network data plane system, comprising a first-level data plane system, wherein the first-level data plane system comprises a first application proxy module and a first data service module, and the first application proxy module is configured to send a standard data subscription demand and a standard data extraction request sent by a data consumer to the first data service module;
the first data service module is provided with a first data model, and is configured to send the standard data subscription demand to a second-level data plane system according to the standard data subscription demand, and to acquire first subscription data according to the first data model and the standard data subscription demand; and the first data service module is further configured to send the standard data extraction request to the second-level data plane system according to the standard data extraction request to acquire second subscription data that is acquired by the second-level data plane system according to the standard data subscription demand, and to send the first subscription data and the second subscription data to the first application proxy module, to allow the first application proxy module to acquire customized data according to the first subscription data and the second subscription data and to send the customized data to the data consumer.

2. The system according to claim 1, wherein the first-level data plane system further comprises a first data execution module; the first data execution module is connected with the first data service module; the first data service module is further configured to generate a first data generation rule and a first data processing conversion rule according to the first data model and the standard data subscription demand, and to send the first data generation rule and the first data processing conversion rule to the first data execution module; and the first data execution module is configured to generate the first subscription data according to the first data generation rule and the first data processing conversion rule and to send the first subscription data to the first data service module.

3. The system according to claim 2, wherein, the first data execution module comprises a first data service proxy module and a first data generation module; the first data service module is connected with the first data generation module and the first data service proxy module respectively; the first data generation module is connected with the first data service proxy module; the first data generation module is configured to receive the first data generation rule, generate first raw data according to the first data generation rule, and send the first raw data to the first data service proxy module; and the first data service proxy module is configured to receive the first data processing conversion rule and the first raw data, process the first raw data according to the first data processing conversion rule to obtain the first subscription data, and send the first subscription data to the first data service module.

4. A network data plane system, comprising a second-level data plane system that is in communicative connection with a first-level data plane system; wherein, the second-level data plane system comprises:
a second data service module, which is provided with a second data model, and is connected with a first data service module in the first-level data plane system to receive a standard data subscription demand and a standard data extraction request sent by the first data service module; and the second data service module is configured to acquire second subscription data according to the standard data subscription demand and the second data model, and to send the second subscription data to the first data service module according to the standard data extraction request.

5. The system according to claim 4, wherein the second-level data plane system further comprises a second data execution module; the second data execution module is connected with the second data service module; the second data service module is further configured to generate a second data generation rule and a second data processing conversion rule according to the second data model and the standard data subscription demand, and to send the second data generation rule and the second data processing conversion rule to the second data execution module; and the second data execution module is configured to generate second subscription data according to the second data generation rule and the second data processing conversion rule, and to send the second subscription data to the second data service module.

6. The system according to claim 5, wherein, the second data execution module comprises a second data service proxy module and a second data generation module; the second data service module is connected with the second data generation module and the second data service proxy module respectively; the second data generation module is connected with the second data service proxy module; the second data generation module is configured to receive the second data generation rule, generate second raw data according to the second data generation rule, and send the second raw data to the second data service proxy module; and the second data service proxy module is configured to receive the second data processing conversion rule and the second raw data, process the second raw data according to the second data processing conversion rule to obtain the second subscription data, and send the second subscription data to the second data service module.

7. A method for data interaction for a network data plane system, which is applied to a first-level data plane system in the network data plane system, wherein the first-level data plane system comprises a first application proxy module and a first data service module, and the first data service module is provided with a first data model, and the first data service module is connected with the first application proxy module; wherein,
the method comprises:
sending by the first application proxy module, a standard data subscription demand sent by a data consumer to the first data service module ;
receiving the standard data subscription demand by the first data service module, and sending the standard data subscription demand to a second-level data plane system according to the standard data subscription demand, and acquiring first subscription data according to the first data model and the standard data subscription demand;
sending a standard data extraction request sent by the data consumer to the first data service module through the first application proxy module;
receiving the standard data extraction request by the first data service module, and sending the standard data extraction request to the second-level data plane system according to the standard data extraction request to acquire second subscription data obtained by the second-level data plane system according to the standard data subscription demand, and sending the first subscription data and the second subscription data to the first application proxy module; and
receiving the first subscription data and the second subscription data by the first application proxy module, to acquire customized data according to the first subscription data and the second subscription data, and sending the customized data to the data consumer.

8. The method according to claim 7, wherein, the first-level data plane system further comprises a first data execution module connected with the first data service module; and acquiring the first subscription data according to the first data model and the standard data subscription demand comprises:
receiving by the first data service module, a standard data subscription demand sent by the first data service module; generating, by the first data service module, a first data generation rule and a first data processing conversion rule according to the first data model and the standard data subscription demand; and sending, by the first data service module, the first data generation rule and the first data processing conversion rule to the first data execution module; and
receiving, by the first data execution module, the first data generation rule and the first data processing conversion rule; acquiring, by the first data execution module, the first subscription data according to the first data generation rule and the first data processing conversion rule; and sending, by the first data execution module, the first subscription data to the first data service module.

9. The method according to claim 8, wherein, the first data execution module comprises a first data service proxy module and a first data generation module; the first data service module is connected with the first data generation module and the first data service proxy module respectively; the first data generation module is connected with the first data service proxy module; and receiving, by the first data execution module, the first data generation rule and the first data processing conversion rule; acquiring, by the first data execution module, the first subscription data according to the first data generation rule and the first data processing conversion rule; and sending, by the first data execution module, the first subscription data to the first data service module, comprises:
sending the first data generation rule to the first data generation module through the first data service module, to allow the first data generation module to generate first raw data according to the first data generation rule and to send the first raw data to the first data service proxy module; and
sending the first data processing conversion rule to the first data service proxy module through the first data service module, to allow the first data service proxy module to process the first raw data according to the first data processing conversion rule to acquire the first subscription data and to send the first subscription data to the first data service module.

10. The method according to claim 7, wherein, sending by the first application proxy module, the standard data subscription demand sent by the data consumer to the first data service module, comprises:
receiving, by the first application proxy module, a data subscription demand sent by the data consumer; generating, by the first application proxy module, the standard data subscription demand according to the data subscription demand; and sending, by the first application proxy module, the standard data subscription demand to the first data service module; and
sending the standard data extraction request sent by the data consumer to the first data service module through the first application proxy module, comprises:
receiving, by the first application proxy module, a data extraction request sent by the data consumer; generating, by the first application proxy module, the standard data extraction request according to the data extraction request; and sending, by the first application proxy module, the standard data extraction request to the first data service module.

11. The method according to claim 7, wherein, before sending the standard data extraction request sent by the data consumer to the first data service module through the first application proxy module, the method comprises:
receiving, by the first application proxy module, a data customization demand sent by the data consumer; generating, by the first application proxy module, a standard data customization demand according to the data customization demand; and sending, by the first application proxy module, the standard data customization demand to the first data service module; and
receiving, by the first data service module, the standard data customization demand; generating, by the first data service module, a first data customization rule according to the standard data customization demand and the first data model; and sending, by the first data service module, the first data customization rule to the first application proxy module.

12. The method according to claim 11, wherein, receiving by the first application proxy module the first subscription data and the second subscription data to acquire by the first application proxy module the customized data according to the first subscription data and the second subscription data, comprises:
receiving, by the first application proxy module, the first subscription data and the second subscription data; and processing, by the first application proxy module, the first subscription data and the second subscription data according to the first data customization rule to acquire the customized data.

13. A method for data interaction for a network data plane system, which is applied to a second-level data plane system in the network data plane system, and the second-level data plane system being in communicative connection with a first-level data plane system; wherein the second-level data plane system comprises a second data service module provided with a second data model, and the second data service module is connected with a first data service module in the first-level data plane system; and
the method comprises:
receiving a standard data subscription demand sent by the first data service module by the second data service module, and acquiring second subscription data according to the standard data subscription demand and the second data model; and
receiving a standard data extraction request sent by the first data service module by the second data service module, and sending the second subscription data to the first data service module according to the standard data extraction request.

14. The method according to claim 13, wherein, the second-level data plane system further comprises a second data execution module connected with the second data service module; and acquiring the second subscription data according to the standard data subscription demand and the second data model comprises:
receiving, by the second data service module, the standard data subscription demand sent by the first data service module; generating, by the second data service module, a second data generation rule and a second data processing conversion rule according to the standard data subscription demand and the second data model; and sending, by the second data service module, the second data generation rule and the second data processing conversion rule to the second data execution module; and
receiving, by the second data execution module, the second data generation rule and the second data processing conversion rule; acquiring, by the second data execution module, the second subscription data according to the second data generation rule and the second data processing conversion rule; and sending, by the second data execution module, the second subscription data to the second data service module.

15. The method according to claim 14, wherein, the second data execution module comprises a second data service proxy module and a second data generation module; the second data service module is connected with the second data generation module and the second data service proxy module respectively; the second data generation module is connected with the second data service proxy module; and receiving, by the second data execution module, the second data generation rule and the second data processing conversion rule; acquiring, by the second data execution module, the second subscription data according to the second data generation rule and the second data processing conversion rule; and sending, by the second data execution module, the second subscription data to the second data service module, comprises:
sending the second data generation rule to the second data generation module through the second data service module, to allow the second data generation module to generate second raw data according to the second data generation rule and to send the second raw data to the second data service proxy module; and
sending the second data processing conversion rule to the second data service proxy module through the second data service module, to allow the second data service proxy module to process the second raw data according to the second data processing conversion rule to acquire second subscription data and to send the second subscription data to the second data service module.

16. A network data plane system, comprising, a processor, and a memory storing thereon a computer program executable by the processor which, when executed by the processor, causes the processor to carry out:
the method according to any one of claims 7 to 12;
or,
the method according to any one of claims 13 to 15.

17. A computer-readable storage medium storing a computer-executable instruction which, when executed by a processor, causes the processor to carry out:
the method according to any one of claims 7 to 12;
or,
the method according to any one of claims 13 to 15.
